# EUROPÄISCHE PATENTSCHRIFT

(11) **EP 3 048 311 B1**
(45) Veröffentlichungstag und Bekanntmachung des Hinweises auf die Patenterteilung: **02.08.2017**
(21) Anmeldenummer: 15152015.2
(22) Anmeldetag: 21.01.2015
(51) Int. Cl.: F16B 7/04

(54) **Klemmverbinder**
Binder
Connecteurs de serrage

(43) Veröffentlichungstag der Anmeldung: 27.07.2016
(73) Patentinhaber: Hestex Systems B.V., 7332 BE Apeldoorn (NL)
(72) Erfinder: Arie Sint ,Nicolaas, Bonaire BES (AN)
(74) Vertreter: Rausch.Wanischeck.Brinkmann.Intellectual Property

(56) Entgegenhaltungen:
- WO-A1-97/25536
- JP-A- 2006 194 436
- US-A- 5 143 474

## Beschreibung

Die Erfindung betrifft einen Klemmverbinder zum lösbaren Verbinden von zwei Elementen, von denen das erste eine hinterschnittene Längsnut und das zweite einen Aufnahmeraum für ein Gehäuse des Klemmverbinders aufweist, wobei das Gehäuse des Klemmverbinders zwei einander in Längsrichtung des Gehäuses gegenüberliegende Stirnseiten und zumindest eine die beiden Stirnseiten verbindende Seitenwand aufweist, mit einem im Gehäuse gelagerten Übertragungsglied, wobei das Übertragungsglied mittels eines Betätigungselements in Längsrichtung des Gehäuses zwischen einer Klemmstellung und einer Montagestellung bewegbar ist, wobei das Übertragungsglied ein Ankerelement zur Anordnung in einer hinterschnittenen Längsnut antreibt, welches Ankerelement sowohl in der Klemmstellung als auch in der Montagestellung über eine der Stirnseiten des Gehäuses in Längsrichtung vorsteht, wobei das Übertragungsglied in der Klemmstellung teilweise in das Gehäuse eingezogen ist und infolge dessen das Übertragungsglied sowie das Ankerelement durch einen im Bewegungsweg angeordneten Rampenmechanismus quer zur Längsrichtung des Gehäuses ausgelenkt sind.

Derartige Klemmverbinder sind aus dem Stand der Technik bekannt. Es handelt sich hierbei um Vorrichtungen zum Verbinden von zwei oder mehr Profilelementen miteinander. Derartige Profilelemente und Klemmverbinder werden zum schnellen Auf- und/oder Abbau von Messebauten, Regalsystemen und dergleichen verwendet.

Es ist beispielsweise aus der EP 2 738 317 A1 bekannt, sogenannte Wandbauplattenelemente für den mobilen Aufbau von Wänden einzusetzen. Diese umfassen eine flächige Wandbauplatte, welche an allen vier Kanten mit insgesamt einen Rahmen bildenden Profilelementen besetzt ist. Die einzelnen Profilelemente werden in den Eckbereichen des Rahmens mit Hilfe gattungsgemäßer Klemmverbinder verbunden. Hierzu wird der Klemmverbinder in ein erstes Element wie beispielsweise ein Profilelement eingesteckt. Das Element weist hierzu einen Aufnahmeraum für das Gehäuse des Klemmverbinders auf. Anschließend wird ein zweites Element mit einer hinterschnittenen Längsnut, beispielsweise ein entsprechendes Profilelement, auf die aus dem Gehäuse des Klemmverbinders stirnseitig vorstehenden Ankerelemente gesteckt. Durch anschließendes Betätigen des Betätigungselements werden die Ankerelemente in die Klemmstellung überführt, wobei die Ankerelemente in dieser Konfiguration die hinterschnittene Längsnut von hinten umklammern. Die beiden (Profil-)Elemente sind dann sicher miteinander verbunden.

Ein gattungsgemäßer Klemmverbinder ist aus der EP 1 234 985 B1 bekannt. Um den dort offenbarten Klemmverbinder flexibel einsetzen zu können und beispielsweise auch im Zusammenhang mit Holzelementen verwendbar zu machen, wird ein Adapterelement vorgeschlagen, welches zunächst in das den Aufnahmeraum bereitstellende Element eingebracht wird. Erst anschließend wird der eigentliche Klemmverbinder mit seinem Gehäuse in diesen Adapter eingesteckt.

Dokument JP2006194436 A offenbart einen Klemmverbinder nach dem Oberbegriff des Anspruchs 1.

Die bekannten Klemmverbinder haben sich dem Grunde nach bewährt. Die Verwendung des Adapters bringt jedoch mit sich, dass für unterschiedliche Aufnahmeräume unterschiedliche Adapter vorgehalten werden müssen. Außerdem muss die Montage insofern zweistufig durchgeführt werden, als zunächst der Adapter in den Aufnahmeraum eingebracht wird und erst anschließend der eigentliche Klemmverbinder montiert werden kann. Insofern ist es im Stand der Technik auch bei nur geringen Abweichungen der Geometrie des Aufnahmeraums erforderlich, unterschiedliche Adapter und/oder unterschiedliche Klemmverbinder zu verwenden.

Von diesem Stand der Technik ausgehend ist es die **Aufgabe** der Erfindung, die Handhabung eines gattungsgemäßen Klemmverbinders zu vereinfachen und die Montagezeit zu verkürzen. Außerdem soll die Anzahl der auf Lager vorzuhaltenden Teile reduziert werden.

Zur Lösung schlägt die Erfindung vor, dass eine Klemmbacke des Übertragungsglieds, insbesondere Blattfederelements in der Klemmstellung durch die Ausnehmung hindurch über die Seitenwand des Gehäuses vorsteht.

Der Clou der Erfindung liegt darin, dass durch ein Betätigen des Übertragungsglieds, insbesondere Blattfederelements von der Montagestellung in die Klemmstellung nicht nur zu einer Klemm- beziehungsweise Aufspreizbewegung der aus der Stirnseite des Gehäuses vorstehenden Ankerelemente führt, sondern auch eine Aufspreizbewegung im Bereich des Gehäuses selbst erfolgt. Die Aufspreizbewegung kommt dadurch zustande, dass die Klemmbacke durch die Ausnehmung im Gehäuse hindurch über die Seitenwand des Gehäuses vorsteht. Es wird mit anderen Worten die Dicke beziehungsweise Höhe des Gehäuses durch die Klemmbacke vergrößert. Es erfolgt in der Klemmstellung eine Aufspreizung in einem Bereich des Gehäuses, welcher bei bestimmungsgemäßer Verwendung in das Element mit dem Aufnahmeraum für das Gehäuse eingesteckt ist.

Durch ein und dieselbe Betätigung des Betätigungselements erfolgt somit ein doppeltes Verspannen des Klemmverbinders. Zum einen greifen die Ankerelemente wie bereits aus dem Stand der Technik bekannt hinter die hinterschnittene Nut und sichern so das erste Element mit der hinterschnittenen Nut. Zugleich fährt die Klemmbacke durch die Ausnehmung hindurch aus dem Gehäuse aus und sorgt somit dafür, dass der Klemmverbinders auch mit dem zweiten Element verspannt wird. Durch die aus der Ausnehmung vorstehende Klemmbacke wird das Gehäuse fest im Aufnahmeraum des zweiten Elements eingespannt. Im Ergebnis sind dann die beiden miteinander zu verbindenden Elemente sehr sicher und fest aneinander gehalten. Dies alles erfolgt mit denkbar wenigen Handgriffen. So muss lediglich der Klemmverbinder in den Aufnahmeraum des zweiten Elements eingebracht werden, das erste Element auf die Ankerelemente aufgesteckt werden und anschließend das Betätigungselement betätigt werden. Die Handhabung geht somit denkbar einfach und vor allem auch schnell von statten. Auf das aus dem Stand der Technik bekannte Adapterelement kann in vielen Fällen vollständig verzichtet werden. Dies reduziert die Anzahl der auf Lager vorzuhaltenden Teile bereits in erheblichem Umfang.

Hinzu kommt, dass durch die bei Überführung in die Klemmstellung aus dem Gehäuse hervortretene Klemmbacke ein etwaiges Spiel zwischen dem Gehäuse einerseits und dem Aufnahmeraum im zweiten Element andererseits ausgeglichen werden kann. Dies führt soweit, dass mit dem erfindungsgemäßen Konzept ein und dieselbe Ausführungsform eines Klemmverbinders in Aufnahmeräumen mit beispielsweise 8mm Dicke und 6mm Dicke gleichermaßen montiert werden kann. Bei nur geringen geometrischen Unterschieden zwischen den Aufnahmeräumen kann somit ein und derselbe Klemmverbinder in beiden Aufnahmeräumen gleichermaßen verwendet werden.

Das Übertragungsglied dient dazu, eine ausschließlich rotierende Bewegung des Betätigungselements in eine zumindest auch translatorische Bewegung des Ankerelements und erfindungsgemäß auch der Klemmbacke umzusetzen. Das Übertragungsglied kann vorzugsweise als Blattfederelement ausgebildet sein. Wenn im Folgenden von dem Blattfederelement die Rede ist, gilt dies auch bezüglich des allgemeiner zu verstehenden Übertragungsglieds, sofern es nicht im Speziellen auf die federelastischen Eigenschaften des Blattfederelements ankommt. Das Ankerelement kann ein einstückiger Bestandteil des Übertragungsglieds bzw. Blattfederelements sein.

Die Klemmbacke ist eine Vorrichtung zur Ausbildung einer kraftschlüssigen Verbindung mit einer die Ausnehmung definierenden Wand. Die Klemmbacke kann eine reibungserhöhende Oberfläche aufweisen, beispielsweise in Form eines Reibbelags.

Gemäß einer vorteilhaften Weiterbildung der Erfindung ist die Klemmbacke zwischen dem Ankerelement und einem dem Ankerelement gegenüberliegenden Ende des Blattfederelements angeordnet. Die Klemmbacke befindet sich mit Bezug zur Längsrichtung des Gehäuses sowohl in der Montagestellung als auch in der Klemmstellung im Inneren des Gehäuses. Die Klemmbacke und das Ankerelement dienen somit zum Verspannen des Klemmverbinders mit unterschiedlichen Teilen. In vorteilhafter Weise weist der Klemmverbinder im Wesentlichen die gleiche geometrische Gestalt wie die eingangs beschriebenen, aus dem Stand der Technik bekannten Klemmverbinder auf. Insofern ist ein erfindungsgemäßer Klemmverbinder abwärts kompatibel und kann besonders flexibel eingesetzt werden. Von Vorteil ist es hierbei, wenn die Klemmbacke elastisch verbiegbar ausgebildet ist. In einem Aufnahmeraum, welcher kein Austreten der Klemmbacke aus der Ausnehmung heraus erlaubt, kann die Klemmbacke durch diese Art Zwangsführung unter elastischer Verbiegung ausweichen.

Die Klemmbacke kann durch einen gewölbten Bereich des Blattfederelements gebildet sein. Die Klemmbacke kann polygonal oder stetig gekrümmt ausgebildet sein. Es kann sich um eine konvexe Form handeln. Die Klemmbacke kann die gleiche Materialstärke wie das übrige Blattfederelement aufweisen. Insofern lässt sich die Klemmbacke einfach in einen Grundkörper des Blattfederelements durch beispielsweise Biegen einbringen.

Vorzugsweise mündet die Ausnehmung in eine das Gehäuse in Längsrichtung begrenzende Stirnkante. Die Ausnehmung kann durch einen an der Stirnkante angesetzten und U-förmig verlaufenden Schnitt gebildet sein. Vorzugsweise ist die Ausnehmung ausschließlich in einer zwei Schmalseiten des Gehäuses miteinander verbindenden Breitseite ausgebildet. Die beiden Schmalseiten hingegen erstrecken sich nach wie vor bis zur Stirnkante des Gehäuses. Dadurch wird eine gute Stabilität des Gehäuses erreicht, so dass die Funktionalität eines erfindungsgemäßen Klemmverbinders im Vergleich zum Stand der Technik nicht verschlechtert ist.

Die Ausnehmung kann materialabtragend in das Gehäuse eingebracht sein. Die Ausnehmung kann beispielsweise durch ein spanabhebendes Verfahren wie Fräsen in das Gehäuse eingebracht werden. Die Herstellung des Gehäuses kann so sehr flexibel und nach Belieben gestaltet werden, was die Herstellung des Klemmverbinders vereinfacht und auch die damit verbundenen Kosten reduziert.

Die Breite der Ausnehmung kann der Breite des Blattfederelements entsprechen. Hiervon umfasst sind auch solche Ausbildungen, bei denen die Breite der Ausnehmung ein leichtes Übermaß gegenüber der Breite des Blattfederelements aufweist. Entscheidend ist in diesem Zusammenhang, dass die Ausnehmung vergleichsweise schmal ausgebildet werden kann, was die Stabilität des Gehäuses erhöht.

Gemäßer einer vorteilhaften Weiterbildung der Erfindung weist das Blattfederelement zwei durch einen Schnitt in Längsrichtung voneinander getrennte Zungen auf. Beide Zungen können an ihren stirnseitig aus dem Gehäuse vorstehenden Enden jeweils ein Ankerelement aufweisen. Die beiden Zungen können spiegelbildlich ausgebildet sein. Beide Zungen können eine Klemmbacke aufweisen. Bei bestimmungsgemäßer Verwendung führt die Betätigung des Klemmverbinders von der Montagestellung in die Klemmstellung dazu, dass sowohl die beiden Ankerelemente der beiden Zungen auseinandergespreizt werden und somit für einen sicheren Halt in der hinterschnittenen Längsnut sorgen, als auch die beiden Klemmbacken der Zungen in entgegengesetzter Richtung auseinandergespreizt werden. Im Ergebnis ist somit der Klemmverbinder an beiden Elementen besonders sicher gehalten bei gleichzeitig denkbar einfacher Montage. Bei dem zwei Zungen aufweisenden Blattfederelement kann vorgesehen sein, dass das Gehäuse zwei Ausnehmungen aufweist, wobei jeweils eine Ausnehmung an einer der Breitseiten ausgebildet ist, wobei die Ausnehmungen in Breitenrichtung voneinander beabstandet sind. Die Ausnehmungen erstrecken sich auf jeder Breitseite des Gehäuses lediglich über etwas weniger als die Hälfte der Breitseite, was für eine gute Stabilität des Gehäuses sorgt.

Gemäß einer vorteilhaften Weiterbildung der Erfindung ist das Blattfederelement auf einem sich in Breitenrichtung durch das Gehäuse erstreckenden Steg gelagert, wobei die Klemmbacke und der Steg zusammen den Rampenmechanismus bilden. Der Steg und das Blattfederelement, insbesondere die Klemmbacke, gleiten und/oder rollen aufeinander ab. Eines oder beide dieser Teile sind rampenförmig ausgebildet. Rampenförmig meint, dass das Teil eine Kontaktfläche mit einer Neigung zur Längsrichtung des Gehäuses in Querrichtung aufweist. Eine Bewegung des Blattfederelements in Längsrichtung im Gehäuse wird somit durch den Rampenmechanismus zumindest teilweise in eine Bewegung in Querrichtung gewandelt.

In der Montagestellung kann das Blattfederelement mit der Rückseite der Klemmbacke den Steg umschließen. Die Rückseite der Klemmbacke ist diejenige Seite, welche eine Außenseite der Klemmbacke für den Kontakt mit dem Inneren des Aufnahmeraums gegenüberliegt. Die Rückseite der Klemmbacke ist in Richtung des Inneren des Gehäuses des Klemmverbinders gerichtet. Es kann vorgesehen sein, dass das Blattfederelement in der Montagestellung entspannt ist. In der Klemmstellung hingegen ist das Blattfederelement mit der Rückseite der Klemmbacke unter Auslenkung des Blattfederelements auf den Steg aufgeschoben.

Die Klemmbacke ist ausgehend von einem Grundkörper des Blattfederelements höher als das Ankerelement ausgebildet. Dadurch kann der Klemmverbinder auch in solchen Aufnahmeräumen angeordnet werden, deren Dicke größer ist als die Dicke des Hinterschnitts der hinterschnittenen Längsnut für die Ankerelemente.

In der Klemmstellung steht die Klemmbacke zumindest 1mm, vorzugsweise 2mm, durch die Ausnehmung hindurch über die Seitenwand des Gehäuses vor. Auf diese Weise kann der Klemmverbinder auch in solchen Ausnehmungen montiert werden, deren Dicke deutlich kürzer ist als die Dicke des Klemmverbindergehäuses selbst.

Vorteile und Merkmale der Erfindung ergeben sich auch anhand der nachfolgenden Figurenbeschreibung. Es zeigen:
- Fig. 1: In perspektivischer Ansicht eine erste Ausführungsform eines erfindungsgemäßen Klemmverbinders;
- Fig. 2: in Draufsicht einen Längsschnitt durch den Klemmverbinder gemäß Fig. 1 in der Montagestellung;
- Fig. 3: ein Schnitt entlang der Linie III-III in Fig. 2;
- Fig. 4: eine Draufsicht auf einen Längsschnitt durch den Klemmverbinder gemäß Fig. 1 in Klemmstellung;
- Fig. 5: ein Schnitt entlang der Linie V-V in Fig. 4 und
- Fig. 6: eine zweite Ausführungsform eines erfindungsgemäßen Klemmverbinders.

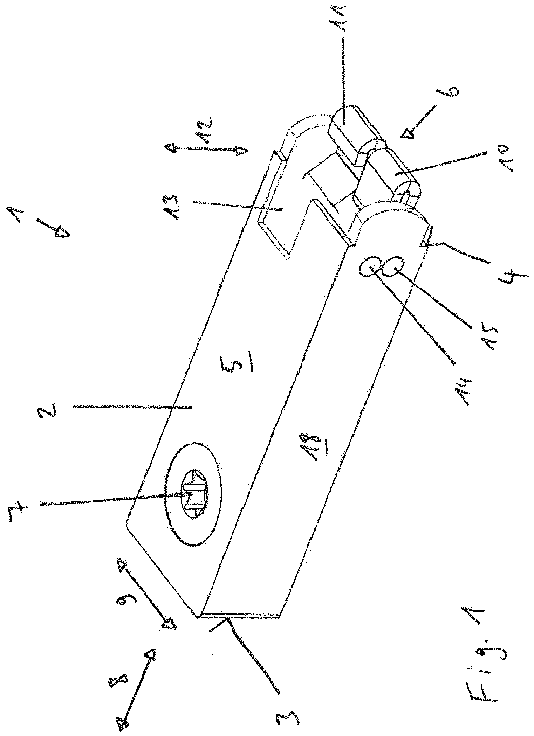

Figur 1 zeigt eine erste Ausführungsform eines Klemmverbinders 1. Dieser verfügt über ein Gehäuse 2. Das Gehäuse 2 ist im Wesentlichen quaderförmig ausgebildet. Es verfügt über zwei Breitseiten, von denen eine als Seitenwand 5 bezeichnet ist. Die beiden Breitseiten sind durch Schmalseiten 18 miteinander verbunden. Das Gehäuse 2 ist schließlich durch einander gegenüberliegende Stirnseiten 3, 4 begrenzt.

Im Gehäuse ist ein Übertragungsglied 6 in Form eines Blattfederelements angeordnet (im Folgenden wird das Bezugszeichen 6 für das Blattfederelement verwendet). Das Blattfederelement 6 weist vorliegend zwei Zungen auf, welche durch einen Schnitt in Längsrichtung 8 voneinander getrennt sind. Beide Zungen des Blattfederelements 6 weisen an ihren stirnseitig aus dem Gehäuse 2 hinausragenden Enden jeweils ein Ankerelement 10, 11 auf.

Im Gehäuse 2 ist ein Betätigungselement 7 angeordnet. Dies dient dazu, das Blattfederelement 6 zwischen einer Klemmstellung und einer Montagestellung zu schalten.

In das Gehäuse 2 ist stirnseitig eine Ausnehmung 13 eingebracht. Die Ausnehmung 13 ist in etwa so breit wie eine der Zungen des Blattfederelements 6.

Die Funktion des Klemmverbinders 1 wird im Folgenden allgemein mit Bezug auf die Figuren 1 bis 5 beschrieben, soweit nicht ausdrücklich anders angegeben.

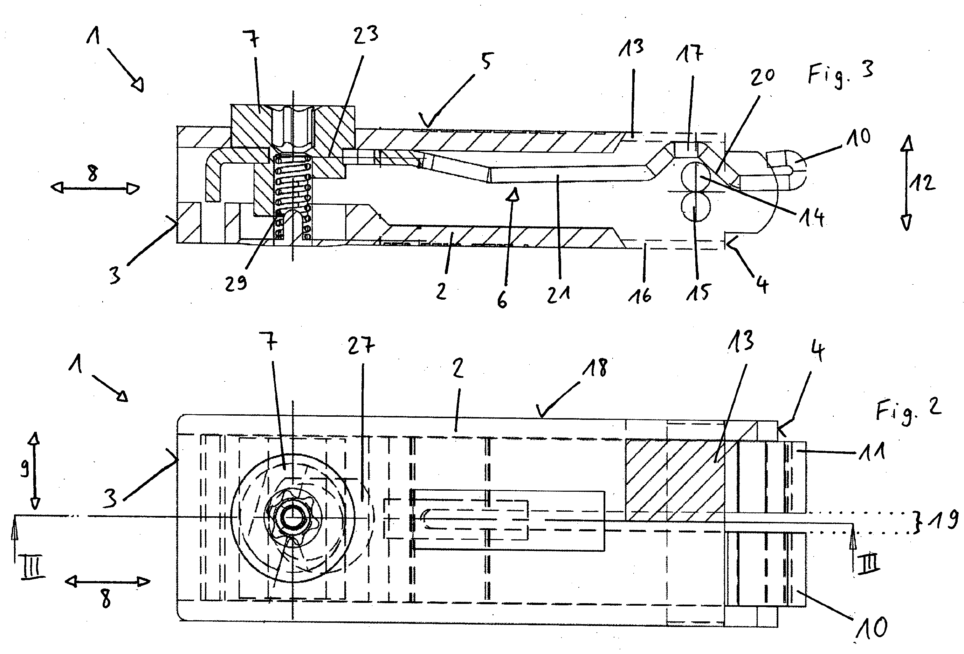

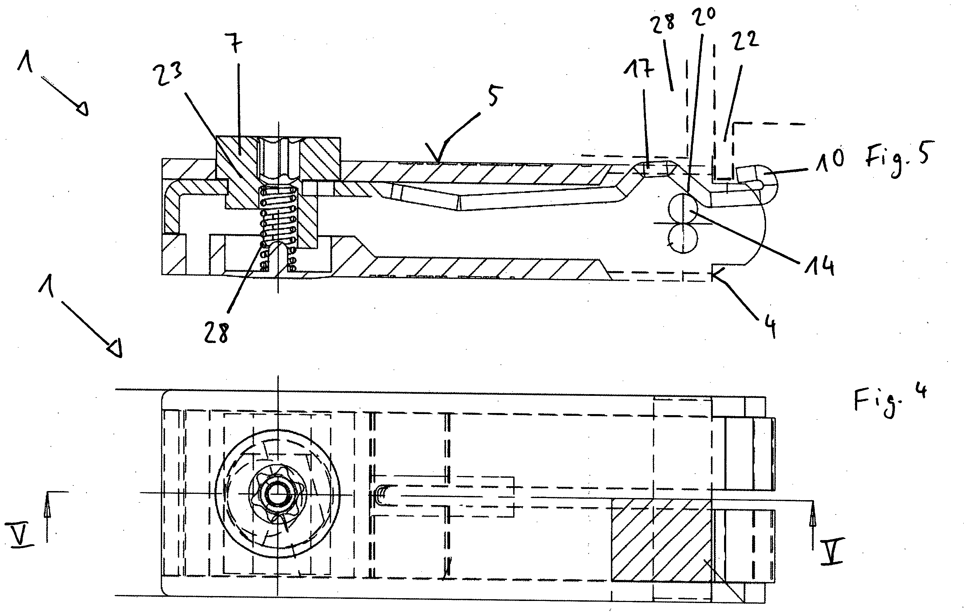

Das im Inneren des Gehäuses 2 angeordnete Blattfederelement 6 ist einstückig ausgebildet. Es weist einen gemeinsamen Teil auf, welcher mit dem Betätigungselement 7 in Wirkverbindung steht. In diesen Teil des Blattfederelements 6 ist eine Öffnung 27 eingebracht. Die Öffnung 27 ist kreisrund ausgebildet, wobei jedoch ein Kreissegment nicht als Öffnung ausgebildet ist. In diese Öffnung 27 ist das Betätigungselement 7 eingesteckt. Das Betätigungselement 7 steht über ein Exzenterprofil 23 mit der die Öffnung 27 begrenzenden Seitenwand in Kontakt. Durch eine Drehung des Betätigungselements 7 gleitet das Exzenterprofil 23 auf der Seitenwand der Öffnung 27 ab, wobei das Blattfederelement 6 dadurch zwischen der in den Figuren 2 und 3 gezeigten Montagestellung und der in den Figuren 4 und 5 gezeigten Klemmstellung hin und her bewegt werden kann.

Ein zweiter Teil des Blattfederelements 6 ist, wie bereits erwähnt, durch einen Schnitt in Längsrichtung 8 in die beiden Zungen unterteilt. Jede Zunge weist einen Grundkörper 21 auf, an dessen stirnseitigem Ende das Ankerelement 10, 11 angeordnet ist. In dem Grundkörper 21 ist zudem eine Klemmbacke 17 geformt. Vorliegend ist diese als eine polygonale Auswölbung ausgebildet. Die Klemmbacke 17 ist unterhalb der Ausnehmung 13 angeordnet. Mit ihrer Rückseite umschließt die Klemmbacke 17 einen Steg 14. Der Steg 14 erstreckt sich in Breitenrichtung 9 durch das Gehäuse 2 hindurch. Er ist in den beiden Schmalseiten 18 des Gehäuses 2 gelagert.

Für die andere Zunge ist ein weiterer Steg 15 vorgesehen. Denkbar ist aber auch, dass die beiden Stege 14, 15 als ein einstückiges Teil ausgebildet sind.

Durch den polygonalen Verlauf weist die Klemmbacke 17 eine Rampe 20 an ihrer Rückseite auf. Die Rampe 20 verläuft mit Bezug zur Längsrichtung 8 des Gehäuses schräg, nämlich in Querrichtung 12 beziehungsweise Höhenrichtung angeschrägt. Sofern nun das Blattfederelement durch Drehen des Betätigungselements 7 in Richtung der Klemmstellung bewegt wird, gleitet und/oder rollt die Klemmbacke 17 mit ihrer Rampe 20 auf dem Steg 14 ab. Die Bewegung des Blattfederelements 6 in Längsrichtung 8 wird dadurch entsprechend der Steigung der Rampe 20 in Querrichtung 12 abgelenkt. Infolge dessen wird das Blattfederelement 6 in Querrichtung 12 elastisch ausgelenkt. Es erreicht schließlich die in Figur 5 dargestellte Lage. Markant ist, dass die Klemmbacke 17 nunmehr über die äußere Oberfläche der Seitenwand 5 aus dem Gehäuse 2 vorsteht. Die Klemmbacke 17 würde in der in Figur 5 gezeigten Stellung also gegen die Wand einer Aufnahme für das Gehäuse 2 drücken. Dadurch würde der Klemmverbinder 1 in der Aufnahme verspannt werden.

Zugleich wird auch das Ankerefement 10 ausgelenkt. Es hintergreift in der in Figur 5 gezeigten Stellung eine hinterschnittene Nut in einem mit gestrichener Linie dargestellten Element 22. Der Klemmverbinder 1 sorgt somit insgesamt dafür, dass die beiden Elemente 22, 28 sicher miteinander verbunden sind, und zwar durch Verspannen mit Hilfe der Klemmbacke 17 gegenüber dem zweiten Element 28 einerseits und durch Hintergreifen der Nut im ersten Element 22 mit Hilfe des Ankerelements 10 andererseits.

In dem die Aufnahme bereitstellenden Element 28 ist zudem eine Aufnahme für den Kopf des Betätigungselements 7 vorgesehen. Diese ist aber nicht dargestellt. Das Einstecken des Klemmverbinders 1 in die Aufnahme im Element 28 geht wie folgt von statten. Das Betätigungselement 7 wird in die in Figur 3 gezeigte Montagestellung gedreht. Das Betätigungselement 7 ist durch eine Feder 29 im Gehäuse 2 gelagert. Es kann entgegen der Kraft der Feder 29 in das Gehäuse 2 hineingedrückt werden, so dass der Kopf des Betätigungselements 7 nicht mehr von der Seitenwand 5 vorsteht. In diesem Zustand wird der Klemmverbinder 1 in die Aufnahme im Element 28 eingeschoben. Erreicht der Klemmverbinder 1 seine bestimmungsgemäße Position, schnellt das Betätigungselement 7 durch die Kraft der Feder 29 in die entsprechend vorgesehene Aufnahme für das Betätigungselement 7 hoch. Der Klemmverbinder 1 ist dann in einem ersten Schritt formschlüssig mit Bezug auf seine Längsrichtung 8 in der Aufnahme im Element 28 gehalten.

Anschließend wird das erste Element 22 mit der hinterschnittenen Nut auf die Ankerelemente 10, 11 aufgesteckt. Daran anschließend wird das Betätigungselement 7 gedreht, so dass das Blattfederelement 6 von der Montagestellung in die Klemmstellung überführt wird. Hier kommt es nun zum bereits beschriebenen Ausfahren der Klemmbacke 17, wodurch das Gehäuse 2 in der Aufnahme des Elements 28 verspannt wird. Zugleich klemmen sich die Ankerelemente 10, 11 in die hinterschnittene Nut, so dass schlussendlich die beiden Elemente 22, 28 sicher aneinander gehalten sind.

Die jeweils zweite, in den Figuren 3 und 5 nicht dargestellten Zunge mit dem Ankerelement 11 verfährt entsprechend spiegelbildlich zur dargestellten Zunge. Sie gleitet beziehungsweise rollt auf dem Steg 15 ab. Für sie ist eine entsprechende Ausnehmung 16 in der der Seitenwand 5 gegenüberliegenden Wand des Gehäuses 2 vorgesehen. Die beiden Zungen sind, wie bereits beschrieben, durch einen Schnitt 19 in Längsrichtung 8 des Gehäuses voneinander getrennt und insbesondere auch voneinander beabstandet.

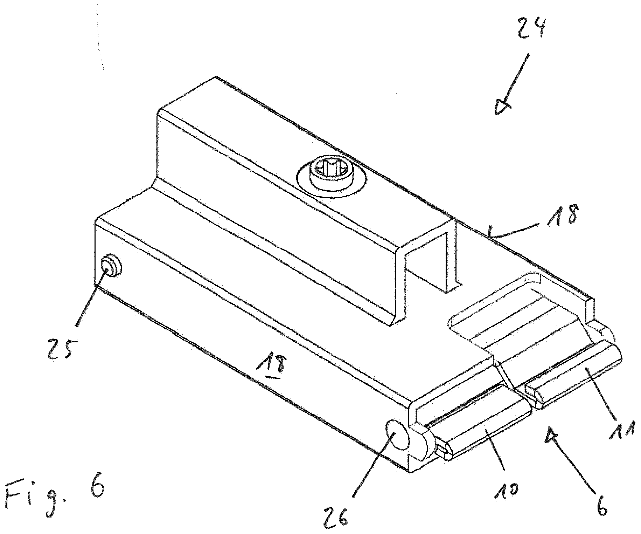

Figur 6 zeigt eine zweite Ausführungsform eines erfindungsgemäßen Klemmverbinders 24. Dieser funktioniert dem Grunde nach identisch wie der zuvor beschriebene Klemmverbinder 1. Er ist jedoch wesentlich breiter ausgebildet, was insbesondere auch in einem deutlich breiteren Blattfederelement 6 resultiert. Vorliegend ist eine Variante gewählt, bei welcher ein gemeinsamer Steg 26 für beide Zungen des Blattfederelements 6 vorhanden ist.

Der Klemmverbinder 24 weist noch einen optionalen Nocken 25 auf. Der Nocken 25 kann an beiden Schmalseiten 18 des Klemmverbinders 24 vorgesehen sein. Er kann unter Zwischenordnung einer Feder im Inneren des Gehäuses 2 gelagert sein, derart, dass er entgegen der Kraft der Feder in das Gehäuse 2 eingedrückt werden kann und bei Erreichen einer bestimmungsgemäßen Endstellung durch die Kraft der Feder in eine entsprechende Aufnahme für den Nocken 25 wieder herausschnellt. Der Nocken 25 dient daher einer erweiterten Sicherung der Anordnung des Klemmverbinders 24 in der Aufnahme des entsprechenden Elements 28. Der Klemmverbinder 1 könnte ebenso über einen Nocken 25 verfügen.

**Bezugszeichen**

| | | | |
|---|---|---|---|
| 1 | Klemmverbinder | 18 | Schmalseite |
| 2 | Gehäuse | 19 | Schnitt |
| 3 | Stirnseite | 20 | Rampe |
| 4 | Stirnseite | 21 | Grundkörper |
| 5 | Seitenwand | 22 | Element |
| 6 | Übertragungsglied | 23 | Exzenterprofil |
| 7 | Betätigungselement | 24 | Klemmverbinder |
| 8 | Längsrichtung | 25 | Nocken |
| 9 | Breitenrichtung | 26 | Steg |
| 10 | Ankerelement | 27 | Öffnung |
| 11 | Ankerelement | 28 | Element |
| 12 | Querrichtung | 29 | Feder |
| 13 | Ausnehmung | | |
| 14 | Steg | | |
| 15 | Steg | | |
| 16 | Ausnehmung | | |
| 17 | Klemmbacke | | |

## Patentansprüche

1. Klemmverbinder (1, 24) zum lösbaren Verbinden von zwei Elementen (22, 28), von denen das erste eine hinterschnittene Längsnut und das zweite einen Aufnahmeraum für ein Gehäuse (2) des Klemmverbinders aufweist, wobei das Gehäuse (2) des Klemmverbinders zwei einander in Längsrichtung (8) des Gehäuses gegenüberliegende Stirnseiten (3, 4) und zumindest eine die beiden Stirnseiten (3, 4) verbindende Seitenwand (5) aufweist, mit einem im Gehäuse (2) gelagerten Übertragungsglied (6), wobei das Übertragungsglied (6) mittels eines Betätigungselements (7) in Längsrichtung (8) des Gehäuses (2) zwischen einer Klemmstellung und einer Montagestellung bewegbar ist, wobei das Übertragungsglied (6) ein Ankerelement (10, 11) zur Anordnung in einer hinterschnittenen Längsnut antreibt, welches Ankerelement (10, 11) sowohl in der Klemmstellung als auch in der Montagestellung über eine der Stirnseiten (3, 4) des Gehäuses (2) in Längsrichtung (8) vorsteht, wobei das Übertragungsglied (6) in der Klemmstellung teilweise in das Gehäuse (2) eingezogen ist und infolge dessen das Übertragungsglied (6) sowie das Ankerelement (10, 11) durch einen im Bewegungsweg angeordneten Rampenmechanismus quer zur Längsrichtung (8) des Gehäuses (2) ausgelenkt sind, wobei in der Seitenwand (5) des Gehäuses (2) eine Ausnehmung (13, 16) ausgebildet ist, **dadurch gekennzeichnet, dass** eine Klemmbacke (17) des Übertragungsglieds (6) in der Klemmstellung durch die Ausnehmung (13, 16) hindurch über die Seitenwand (5) des Gehäuses (2) vorsteht.

2. Klemmverbinder nach Anspruch 1, **dadurch gekennzeichnet, dass** das Übertragungsglied (6) als Blattfederelement ausgebildet ist.

3. Klemmverbinder nach einem der vorangehenden Ansprüche, **dadurch gekennzeichnet, dass** die Klemmbacke (17) zwischen dem Ankerelement (10, 11) und einem dem Ankerelement (10, 11) gegenüberliegenden Ende des Übertragungsglieds (6) angeordnet ist.

4. Klemmverbinder nach einem der vorangehenden Ansprüche, **dadurch gekennzeichnet, dass** die Klemmbacke (17) durch einen gewölbten Bereich des Übertragungsglieds (6) gebildet ist.

5. Klemmverbinder nach einem der vorangehenden Ansprüche, **dadurch gekennzeichnet, dass** die Ausnehmung (13, 16) in eine das Gehäuse (2) in Längsrichtung (8) begrenzende Stirnkante mündet.

6. Klemmverbinder nach einem der vorangehenden Ansprüche, **dadurch gekennzeichnet, dass** die Ausnehmung (13, 16) ausschließlich in einer zwei Schmalseiten (18) des Gehäuses (2) miteinander verbindenden Breitseite ausgebildet ist.

7. Klemmverbinder nach einem der vorangehenden Ansprüche, **dadurch gekennzeichnet, dass** die Ausnehmung (13, 16) materialabtragend in das Gehäuse (2) eingebracht ist.

8. Klemmverbinder nach einem der vorangehenden Ansprüche, **dadurch gekennzeichnet, dass** die Breite der Ausnehmung (13, 16) der Breite des Übertragungsglieds (6) entspricht.

9. Klemmverbinder nach einem der vorangehenden Ansprüche, **dadurch gekennzeichnet, dass** das Übertragungsglied (6) zwei durch einen Schnitt (19) in Längsrichtung (8) voneinander getrennte Zungen aufweist.

10. Klemmverbinder nach Anspruch 9, **dadurch gekennzeichnet, dass** das Gehäuse (2) zwei Ausnehmungen (13, 16) aufweist, wobei jeweils eine Ausnehmung (13, 16) an einer der Breitseiten ausgebildet ist, wobei die Ausnehmungen (13, 16) in Breitenrichtung voneinander beabstandet sind.

11. Klemmverbinder nach einem der vorangehenden Ansprüche, **dadurch gekennzeichnet, dass** das Übertragungsglied (6), insbesondere zwei Zungen des Blattfederelements, auf einem sich in Breitenrichtung (9) durch das Gehäuse (2) erstreckenden Steg (14, 15, 26) gelagert ist, wobei die Klemmbacke (17) und der Steg (14, 15, 26) zusammen den Rampenmechanismus bilden.

12. Klemmverbinder nach Anspruch 11, **dadurch gekennzeichnet, dass** das Übertragungsglied (6) in der Montagestellung mit der Rückseite der Klemmbacke (17) den Steg (4, 15, 26) umschließt.

13. Klemmverbinder nach Anspruch 11 oder 12, **dadurch gekennzeichnet, dass** das Übertragungsglied (6) in der Klemmstellung mit der Rückseite der Klemmbacke (17) unter Auslenkung des Übertragungsglieds, insbesondere Blattfederelements (6) auf den Steg (14, 15, 26) aufgeschoben ist.

14. Klemmverbinder nach einem der vorangehenden Ansprüche, **dadurch gekennzeichnet, dass** die Klemmbacke (17) ausgehend von einem Grundkörper (21) des Übertragungsglieds (6) höher als das Ankerelement (10, 11) ausgebildet ist.

15. Klemmverbinder nach einem der vorangehenden Ansprüche, **dadurch gekennzeichnet, dass** die Klemmbacke (17) in der Klemmstellung zumindest 1 mm durch die Ausnehmung (13, 16) hindurch über die Seitenwand (5) des Gehäuses (2) vorsteht.

## Claims

1. A clamping connector (1, 24) for the detachable junction of two elements (22, 28), the first one of which comprises an undercut longitudinal groove and the second one of which comprises a receiving space for a housing (2) of the clamping connector, wherein the housing (2) of the clamping connector comprises two end faces (3, 4) arranged opposite each other in the longitudinal direction (8) of the housing and at least one side wall (5) connecting the two end faces (3, 4), comprising a transmission element (6) which is accommodated in the housing (2), wherein the transmission element (6) can be displaced between a clamping position and an assembly position in the longitudinal direction of the housing (2) by means of an actuation element (7), wherein the transmission element (6) drives an anchor element (10, 11) for the arrangement in an undercut longitudinal groove, which anchor element (10, 11) projects beyond one of the end faces (3, 4) of the housing (2) in the longitudinal direction (8) both in the clamping position and in the assembly position, wherein the transmission element (6) is partially retracted into the housing (2) in the clamping position and as a result the transmission element (6) as well as the anchor element (10, 11) are transversely deflected with respect to the longitudinal direction (8) of the housing (2) by a ramp mechanism which is arranged in the movement path, wherein a recess (13, 16) is formed in the side wall (5) of the housing (2), **characterized in that** a clamping jaw (17) of the transmission element (6) projects through the recess (13, 16) beyond the side wall (5) of the housing (2) in the clamping position.

2. A clamping connector according to claim 1, **characterized in that** the transmission element (6) is designed as leaf spring element.

3. A clamping connector according to one of the preceding claims, **characterized in that** the clamping jaw (17) is arranged between the anchor element (10, 11) and an end of the transmission element (6), which end is placed opposite the anchor element (10, 11).

4. A clamping connector according to one of the preceding claims, **characterized in that** the clamping jaw (17) is formed by a bulged portion of the transmission element (6).

5. A clamping connector according to one of the preceding claims, **characterized in that** the recess (13, 16) leads to a face edge limiting the housing (2) in the longitudinal direction (8).

6. A clamping connector according to one of the preceding claims, **characterized in that** the recess (13, 16) is exclusively formed in a broad side which connects two narrow sides (18) of the housing (2) to each other.

7. A clamping connector according to one of the preceding claims, **characterized in that** the recess (13, 16) is arranged in the housing (2) in a material-removing manner.

8. A clamping connector according to one of the preceding claims, **characterized in that** the width of the recess (13, 16) corresponds to the width of the transmission element (6).

9. A clamping connector according to one of the preceding claims, **characterized in that** the transmission element (6) comprises two tongues separated from each other by a cut (19) in the longitudinal direction (8).

10. A clamping connector according to claim 9, **characterized in that** the housing (2) comprises two recesses (13, 16), wherein respectively one recess (13, 16) is formed on one of the broad sides, wherein the recesses (13, 16) are spaced from each other in the direction of width.

11. A clamping connector according to one of the preceding claims, **characterized in that** the transmission element (6), in particular two tongues of the leaf spring element, is placed on a web (14, 15, 26) which extends in the direction of width (9) throughout the housing (2), wherein the clamping jaw (17) and the web (14, 15, 26) together form the ramp mechanism.

12. A clamping connector according to claim 11, **characterized in that** in the assembly position, the rear side of the clamping jaw (17) of the transmission element (6) encompasses the web (14, 15, 26).

13. A clamping connector according to claim 11 or 12, **characterized in that** in the clamping position, the rear side of the clamping jaw (17) of the transmission element (6) is pushed onto the web (14, 15, 26) by displacement of the transmission element, especially the leaf spring element (6).

14. A clamping connector according to one of the preceding claims, **characterized in that** starting from a base body (21) of the transmission element (6), the clamping jaw (17) is higher than the anchor element (10, 11).

15. A clamping connector according to one of the preceding claims, **characterized in that** In the clamping position, the clamping jaw (17) projects at least 1 mm through the recess (13, 16) beyond the side wall (5) of the housing (2).

## Revendications

1. Raccord de serrage (1, 24) pour la liaison amovible de deux éléments (22, 28), dont le premier comprend une gorge longitudinale contre-dépouillée et le deuxième comprend un espace de réception pour un boîtier (2) du raccord de serrage, le boîtier (2) du raccord de serrage comprenant deux surfaces d'extrémité (3, 4) disposées l'une en face de l'autre dans la direction longitudinale (8) du boîtier et au moins une paroi latérale (5), qui relie les deux surfaces d'extrémité (3, 4), comprenant un élément de transmission (6) logé dans le boîtier (2), l'élément de transmission (6) pouvant être déplacé dans la direction longitudinale (8) du boîtier (2) entre une position de serrage et une position de montage par moyen d'un élément d'actionnement (7), l'élément de transmission (6) entraînant un élément d'ancrage (10, 11) pour sa disposition dans une gorge longitudinale contre-dépouillée, lequel élément d'ancrage (10, 11) fait saillie au-delà d'une des surfaces d'extrémité (3, 4) du boîtier (2) dans la direction longitudinale (8) dans la position de serrage et dans la position de montage, l'élément de transmission (6) étant partiellement retiré dans le boîtier (2) dans la position de serrage et par conséquent l'élément de transmission (6) ainsi que l'élément d'ancrage (10, 11) étant déviés transversalement à la direction longitudinale (8) du boîtier (2) par moyen d'un mécanisme de rampe disposé dans le trajet de déplacement, un évidement (13, 16) étant formé dans la paroi latérale (5) du boîtier (2), **caractérisé en ce qu'**une mâchoire de serrage (17) de l'élément de transmission (6) fait saillie à travers l'évidement (13, 16) au-delà de la paroi latérale (5) du boîtier (2) dans la position de serrage.

2. Raccord de serrage selon la revendication 1, **caractérisé en ce que** l'élément de transmission (6) est conçu comme un élément de ressort à lame.

3. Raccord de serrage selon l'une des revendications précédentes, **caractérisé en ce que** la mâchoire de serrage (17) est disposée entre l'élément d'ancrage (10, 11) et une extrémité de l'élément de transmission (6), laquelle extrémité se trouve opposée à l'élément d'ancrage (10, 11).

4. Raccord de serrage selon l'une des revendications précédentes, **caractérisé en ce que** la mâchoire de serrage (17) est formée par une partie voûtée de l'élément de transmission (6).

5. Raccord de serrage selon l'une des revendications précédentes, **caractérisé en ce que** l'évidement (13, 16) débouche dans une arête frontale, qui délimite le boîtier (2) dans la direction longitudinale (8).

6. Raccord de serrage selon l'une des revendications précédentes, **caractérisé en ce que** l'évidement (13, 16) est exclusivement formé dans un côté large, qui relie deux côtés étroits (18) du boîtier (2) l'un à l'autre.

7. Raccord de serrage selon l'une des revendications précédentes, **caractérisé en ce que** l'évidement (13, 16) est aménagé dans le boîtier (2) d'une manière enlevant du matériau.

8. Raccord de serrage selon l'une des revendications précédentes, **caractérisé en ce que** la largeur de l'évidement (13, 16) correspond à la largeur de l'élément de transmission (6).

9. Raccord de serrage selon l'une des revendications précédentes, **caractérisé en ce que** l'élément de transmission (6) comprend deux languettes, qui sont séparées l'une de l'autre par une coupe (19) dans la direction longitudinale (8).

10. Raccord de serrage selon la revendication 9, **caractérisé en ce que** le boîtier (2) comprend deux évidements (13, 16), respectivement un évidement (13, 16) étant formé dans l'un des côtés larges, les évidements (13, 16) étant espacés l'un de l'autre dans la direction de la largeur.

11. Raccord de serrage selon l'une des revendications précédentes, **caractérisé en ce que** l'élément de transmission (6), notamment deux languettes de l'élément de ressort à lame, est disposé sur une entretoise (14, 15, 26), qui s'étend dans la direction de la largeur (9) à travers le boîtier (2), la mâchoire de serrage (17) et l'entretoise (14, 15, 26) formant ensemble le mécanisme de rampe.

12. Raccord de serrage selon la revendication 11, **caractérisé en ce que** dans la position de montage la face arrière de la mâchoire de serrage (17) de l'élément de transmission (6) enferme l'entretoise (14, 15, 26).

13. Raccord de serrage selon la revendication 11 ou la revendication 12, **caractérisé en ce que** dans la position de serrage la face arrière de la mâchoire de serrage (17) de l'élément de transmission (6) est poussée sur l'entretoise (14, 15, 26) en faisant dévier l'élément de transmission, notamment l'élément de ressort à lame (6).

14. Raccord de serrage selon l'une des revendications précédentes, **caractérisé en ce qu'**à partir d'un corps de base (21) de l'élément de transmission (17), la mâchoire de serrage (17) est plus haute que l'élément d'ancrage (10, 11).

15. Raccord de serrage selon l'une des revendications précédentes, **caractérisé en ce que** dans la position de serrage la mâchoire de serrage (17) fait saillie sur au moins 1 mm à travers l'évidement (13, 16) au-delà de la paroi latérale (5) du boîtier (2).
